# EUROPÄISCHE PATENTANMELDUNG

(11) **EP 4 089 779 A1**
(43) Veröffentlichungstag der Anmeldung: **16.11.2022**
(21) Anmeldenummer: 22170233.5
(22) Anmeldetag: 27.04.2022
(51) Int. Cl.: H01M 10/04, B21D 22/20, H01M 10/0585, H01M 50/105, H01M 50/122, H01M 50/124

(54) **VERFAHREN ZUR HERSTELLUNG EINER BATTERIEZELLE, TIEFZIEHWERKZEUG ZUM UMFORMEN EINES FOLIENMATERIALS IN EIN GEHÄUSETEIL FÜR EINE BATTERIEZELLE, GEHÄUSETEIL EINES GEHÄUSES EINER BATTERIEZELLE UND EINE BATTERIEZELLE**

(30) Priorität: 10.05.2021 DE 102021112108
(71) Anmelder: VOLKSWAGEN AG, 38440 Wolfsburg (DE)
(72) Erfinder: Yurtseven, Mesut, 38226 Salzgitter (DE); Ebbighausen, Marius, 31718 Pollhagen (DE)
(74) Vertreter: karo IP

(57) **Zusammenfassung**

Verfahren zur Herstellung einer Batteriezelle (1), zumindest umfassend ein Gehäuse (2) und darin angeordnet mindestens einen Stapel (3) aufeinander angeordneter Elektrodenfolien (4), wobei zumindest ein Gehäuseteil (5) des Gehäuses (2) aus einem elastisch verformbaren Folienmaterial (6) hergestellt ist und wobei der Stapel (3) eine vorbestimmte dreidimensionale Geometrie (7) aufweist. Weiter werden ein Tiefziehwerkzeug (8) zum Umformen eines Folienmaterials (6) in ein Gehäuseteil (5) für eine Batteriezelle (1), ein Gehäuseteil (5) eines Gehäuses (2) einer Batteriezelle (1) sowie eine Batteriezelle (1) vorgeschlagen.

## Beschreibung

Die Erfindung betrifft ein Verfahren zur Herstellung einer Batteriezelle, ein Tiefziehwerkzeug zum Umformen eines Folienmaterials in ein Gehäuseteil für eine Batteriezelle, insbesondere für die durch das Verfahren hergestellte Batteriezelle, ein Gehäuseteil eines Gehäuses einer Batteriezelle, insbesondere der durch das Verfahren und/ oder mit dem Tiefziehwerkzeug hergestellten Batteriezelle, sowie eine Batteriezelle, insbesondere hergestellt durch das Verfahren und/ oder mit dem Tiefziehwerkzeug und/ oder aufweisend das Gehäuseteil.

Die Batteriezelle umfasst ein gasdicht ausgeführtes Gehäuse und darin angeordnet mindestens einen Stapel aufeinander angeordneter Elektrodenfolien. Das Gehäuse ist zumindest teilweise aus einem elastisch verformbaren Folienmaterial hergestellt.

Eine Batteriezelle ist ein Stromspeicher, der z. B. in einem Kraftfahrzeug zum Speichern von elektrischer Energie eingesetzt wird. Insbesondere weist z. B. ein Kraftfahrzeug eine elektrische Maschine zum Antrieb des Kraftfahrzeuges auf, wobei die elektrische Maschine durch die in der Batteriezelle gespeicherte elektrische Energie antreibbar ist. In einer Batteriezelle sind Elektrodenfolien, also Anoden und Kathoden aufeinander gestapelt angeordnet, wobei unterschiedliche Elektrodenfolien durch Separatorfolien oder ein Separatormaterial voneinander getrennt angeordnet sind. Die Elektrodenfolien sind in einem Elektrolyt angeordnet. Es sind z. B. Batteriezellen mit flüssigen oder festen Elektrolyten (Feststoffbatterie) bekannt.

Ein Batteriemodul umfasst insbesondere eine Mehrzahl von Batteriezellen, die miteinander elektrisch in Reihe oder parallel geschaltet und in einem Modulgehäuse angeordnet sind. Auch einzelne Batteriemodule können miteinander elektrisch in Reihe oder parallel geschaltet werden. Eine Batterie umfasst ein Batteriemodul oder eine Mehrzahl von Batteriemodulen.

Batteriezellen können als sogenannte Pouchzellen (oder Taschenzellen) ausgeführt sein. Die Pouchzellen umfassen ein als Pouchfolie bezeichnetes Verbundmaterial als Folienmaterial für das Gehäuse. Das Verbundmaterial ist ein Kompositmaterial, insbesondere umfassend Aluminium und Kunststoff. Das Gehäuse kann durch mehrere Folienmaterialien gebildet sein, die aufeinander angeordnet werden und einen den Stapel umschließenden Gehäuseteil und einen von dem Gehäuseteil in der radialen Richtung nach außen abstehenden Randbereich ausbilden. Das Gehäuse kann auch durch ein einziges Folienmaterial ausgebildet sein, wobei das Gehäuse durch ein Falten des Folienmaterials gebildet wird. In diesem Fall ist zumindest an einer Seitenfläche des Zellengehäuses keine Siegelnaht zur Abdichtung des Randbereichs erforderlich. In den (übrigen) Randbereichen werden die aufeinanderliegenden Folienmaterialien miteinander gasdicht verbunden, insbesondere über eine Siegelnaht. Ableiter, die eine elektrische Kontaktierung der Elektrodenfolien mit einem außerhalb der Batteriezelle angeordneten Stromkreis ermöglichen, erstrecken sich insbesondere über die Siegelnaht durch das Gehäuse nach außen.

Das Folienmaterial wird üblicherweise durch ein Tiefziehwerkzeug verformt, so dass ein Formnegativ zumindest eines Teils des Stapels in dem Folienmaterial erzeugt wird. Der Stapel wird in dem umgeformten Folienmaterial angeordnet und das Gehäuse verschlossen.

Beim Tiefziehen des als Pouchfolie ausgeführten Folienmaterials entsteht durch Federwirkung des Folienmaterials in der Deckfläche eine Wölbung nach außen. Diese Wölbung entsteht insbesondere aufgrund der verschiedene E-Module der verschiedenen Schichten der Pouchfolie. Bei der weiteren Verarbeitung der Pouchfolie in der Zellfertigung entstehen in der fertigen Batteriezelle Falten am Gehäuse, da die Wölbung in der Pouchfolie einen Materialüberfluss darstellt. Dadurch werden die geforderten Geometrien und Toleranzen der Batteriezelle bzw. des Gehäuses nicht eingehalten.

Bisher wurde versucht, diese Wölbung durch Anpassungen von Profilradien des Tiefziehwerkzeugs, durch eine Variation von Reibwerten beim Tiefziehen, durch ein Arbeiten mit Wärme beim Tiefziehen, durch eine Vorformung oder durch die Aufteilung des Tiefziehens in verschiedene Tiefziehstufen zu vermeiden. Alle diese bekannten Vorschläge basieren für einen quaderförmigen Stapel auf einer rechteckigen größten Seitenfläche des Formnegativs des Tiefziehwerkzeugs.

Aus der US 2020/0185668 A1 ist eine Batteriezelle mit einem Gehäuse aus einer Pouchfolie bekannt. Für das Gehäuse ist nur ein Stück Folienmaterial vorgesehen, dass umgeformt und gefaltet wird.

Aus der US 2015/0207114 A1 ist eine Batteriezelle mit einem Gehäuse aus einer Pouchfolie bekannt. Die einander gegenüberliegenden größten Seiten des Gehäuses sind über Einbuchtungen der Oberflächen miteinander verbunden, um so die Stabilität des Gehäuses zu erhöhen.

Aus der US 10,707,453 B2 ist ein Verfahren zur Herstellung einer Batteriezelle mit einem Pouchfolien-Gehäuse bekannt. Nach dem Schließen des Gehäuses wird die Batteriezelle in einer Vakuumkammer angeordnet. Das sich ausdehnende Gehäuse wird an den schmalen Gehäuseseiten auseinandergezogen, so dass sich das Gehäuse an den größten Gehäuseseiten faltenfrei an dem Stapel Elektrodenfolien anlegt.

Aufgabe der vorliegenden Erfindung ist es, die mit Bezug auf den Stand der Technik angeführten Probleme zumindest teilweise zu lösen. Insbesondere soll ein Verfahren zur Herstellung einer Batteriezelle vorgeschlagen werden, durch das eine Wölbung im Folienmaterial und damit eine Faltenbildung am fertigen Gehäuse verhindert werden kann. Entsprechend soll ein Tiefziehwerkzeug zum Umformen eines Folienmaterials in ein Gehäuseteil für eine Batteriezelle, ein Gehäuseteil eines Gehäuses einer Batteriezelle und eine Batteriezelle vorgeschlagen werden.

Zur Lösung dieser Aufgaben trägt ein Verfahren mit den Merkmalen gemäß Patentanspruch 1, ein Tiefziehwerkzeug mit den Merkmalen gemäß Patentanspruch 7, ein Gehäuseteil gemäß Patentanspruch 8 und eine Batteriezelle mit den Merkmalen gemäß Patentanspruch 9 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird ein Verfahren zur Herstellung einer Batteriezelle vorgeschlagen. Die Batteriezelle umfasst zumindest ein Gehäuse und darin angeordnet mindestens einen Stapel aufeinander angeordneter Elektrodenfolien. Zumindest ein Gehäuseteil des Gehäuses oder auch das gesamte Gehäuse ist, ggf. ausschließlich, aus einem elastisch verformbaren Folienmaterial hergestellt. Der Stapel weist eine vorbestimmte dreidimensionale Geometrie auf.

Das Verfahren umfasst zumindest die folgenden Schritte:
a) Bereitstellen des Folienmaterials;
b) Bereitstellen eines Tiefziehwerkzeugs zum Umformen des Folienmaterials zur Bildung zumindest des Gehäuseteils, wobei der Stapel zur Anordnung in dem Gehäuseteil vorgesehen ist und wobei das Tiefziehwerkzeug eine vorbestimmte Formabweichung gegenüber der Geometrie des Stapels aufweist;
c) Tiefziehen des Gehäuseteils und (dabei) Ausbilden eines Formnegativs des Stapels in dem Folienmaterial, wobei das Formnegativ die Formabweichung umfasst;
d) Anordnen des Stapels in dem Gehäuseteil und (nachträgliches) Verformen der Formabweichung des Gehäuseteils durch den Stapel durch Verdrängen; wobei durch das Verdrängen der Formabweichung eine Zugspannung auf einen von der Formabweichung beabstandet angeordneten Bereich des Gehäuseteils ausgeübt wird;
e) Schließen des Gehäuses und Ausbilden der Batteriezelle.

Die obige (nicht abschließende) Einteilung der Verfahrensschritte in a) bis e) soll vorrangig nur zur Unterscheidung dienen und keine Reihenfolge und/oder Abhängigkeit erzwingen. Auch die Häufigkeit der Verfahrensschritte kann variieren. Ebenso ist möglich, dass Verfahrensschritte einander zumindest teilweise zeitlich überlagern. Insbesondere werden die Schritte a) bis e) in der angeführten Reihenfolge durchgeführt.

In einer Batteriezelle sind insbesondere Elektrodenfolien, also Anoden und Kathoden, aufeinander gestapelt angeordnet, wobei unterschiedliche Elektrodenfolien durch Separatorfolien oder ein Separatormaterial voneinander getrennt angeordnet sind. Die Elektrodenfolien sind in einem Elektrolyt angeordnet. Es sind z. B. Batteriezellen mit flüssigen oder festen Elektrolyten (Feststoffbatterie) bekannt. Die Batteriezelle ist insbesondere eine Lithium-Ionen-Batteriezelle. Die elektrische Kontaktierung der Batteriezelle erfolgt insbesondere über Ableiter, die innerhalb der Batteriezelle die Elektrodenfolien elektrisch leitend kontaktieren und sich über das Gehäuse, insbesondere über die Randbereiche, die durch die aufeinander angeordneten Gehäuseteile in Schritt e) gebildet sind, nach außen erstrecken.

Das Gehäuse wird insbesondere aus mehreren Gehäuseteilen, insbesondere aus zwei Gehäuseteilen zusammengesetzt. Zumindest eines der Gehäuseteile, ggf. beide oder eben alle Gehäuseteile, wird bzw. werden durch das Folienmaterial gebildet.

Insbesondere wird das Gehäuse nur durch ein einteilig ausgeführtes Folienmaterial gebildet, dass durch eine Faltung das Gehäuse bildet. Infolge der Faltung weist das Gehäuse an einer Umfangsfläche des Gehäuses einen durch das durchgehende Folienmaterial gebildeten Randbereich auf, der keine weitere Abdichtungsmaßnahme erfordert. Die bei einem (im Wesentlichen) quaderförmigen Gehäuse, mit zwei einander gegenüberliegenden größten Seitenflächen und vier kleineren Umfangsflächen, sich entlang dreier Umfangsflächen erstreckenden Randbereiche, die durch das infolge der Faltung aufeinander abgelegte Folienmaterial gebildet sind, werden insbesondere durch Siegelnähte gasdicht verschlossen.

Das Folienmaterial ist insbesondere eine Pouchfolie, bevorzugt ein als Kompositmaterial ausgeführtes, bevorzugt mehrlagiges, Verbundmaterial, insbesondere umfassend Aluminium und Kunststoff.

Gemäß Schritt a) erfolgt insbesondere ein Bereitstellen des Folienmaterials. Das Folienmaterial ist insbesondere eben ausgeführt und weist gegenüber der ebenen Erstreckung insbesondere keine Verformungen auf.

Gemäß Schritt b) erfolgt ein Bereitstellen eines Tiefziehwerkzeugs zum Umformen des Folienmaterials zur Bildung zumindest des Gehäuseteils. Das Tiefziehwerkzeug umfasst insbesondere einen Stempel, der mit einer Matrize zur Ausbildung des Gehäuseteils, insbesondere durch eine zumindest teilweise plastische Verformung des Folienmaterials, zusammenwirkt.

Der Stapel ist zur Anordnung in dem durch das umgeformte Folienmaterial gebildeten Gehäuseteil vorgesehen. Das Gehäuseteil ist insbesondere für diesen Zweck eingerichtet. Der Stapel weist damit eine bekannte Geometrie auf, z. B. - ohne Betrachtung der Ableiter - eine quaderförmige Geometrie. Damit ist die Form des Tiefziehwerkzeugs vorgegeben. Das Tiefziehwerkzeug weist eine vorbestimmte Formabweichung gegenüber dieser Geometrie des Stapels auf. Das Tiefziehwerkzeug weist also gerade nicht die der Form des Stapels entsprechende und zur Aufnahme des Stapels geeignete Gestalt, also ein Formnegativ des Stapels bzw. eines Teils des Stapels auf, sondern weist eine davon abweichende Formabweichung auf.

Gemäß Schritt c) erfolgt ein Tiefziehen des Gehäuseteils und ein, bevorzugt gleichzeitiges, Ausbilden eines Formnegativs des Stapels bzw. eines Teils des Stapels in dem Folienmaterial durch das Tiefziehwerkzeug, wobei das Formnegativ die Formabweichung umfasst. Bereits an dem umgeformten Folienmaterial ist nun erkennbar bzw. feststellbar, dass das durch das Tiefziehen erzeugte Formnegativ von der Geometrie des zur Anordnung in diesem Gehäuseteil vorgesehenen Stapels abweicht.

Gemäß Schritt d) erfolgt ein Anordnen des Stapels in dem durch das Tiefziehen des Folienmaterials erzeugten Gehäuseteil und ein, bevorzugt anschließendes, Verformen der Formabweichung des Gehäuseteils durch den Stapel durch Verdrängen. Durch das Verdrängen der Formabweichung wird eine Zugspannung auf einen von der Formabweichung beabstandet angeordneten Bereich des Gehäuseteils ausgeübt bzw. induziert.

Es liegt also eine räumliche Überschneidung zwischen der Geometrie des Stapels und dem in dem Gehäuseteil eingeprägten Formnegativ vor. Diese Überschneidung wird durch die Anordnung des Stapels in dem Gehäuseteil aufgelöst. Dabei wird das Folienmaterial durch den Stapel verdrängt, so dass das Folienmaterial nach der Anordnung des Stapels im Wesentlichen die Geometrie des Stapels aufweist.

Die Verformung des Folienmaterials durch die Anordnung des Stapels führt dazu, dass eine Zugspannung zumindest auf einen von der Formabweichung beabstandet angeordneten Bereich des Gehäuseteils ausgeübt wird. Z. B. ist die Formabweichung an einer ersten Seitenfläche des Gehäuseteils vorgesehen, wobei durch die Verdrängung der Formabweichung eine Zugspannung an einer zur ersten Seitenfläche benachbart angeordneten Seitenfläche induziert wird.

Gemäß Schritt e) erfolgt (ggf. nun unmittelbar anschließend, sondern zeitlich versetzt) ein Schließen des Gehäuses und ein Ausbilden der Batteriezelle.

Infolge der in zumindest einem Bereich des Gehäuseteils induzierten Zugspannung kann die Ausbildung einer Wölbung des Folienmaterials verhindert werden. Es wird so sichergestellt, dass das Folienmaterial möglichst eng an der Geometrie des Stapels anliegt. Eine Faltenbildung im Gehäuseteil beim Schließen des Gehäuses und beim Ausbilden der Batteriezelle kann so wirksam verhindert werden.

Insbesondere weist der durch das Formnegativ abgebildete Teil des Stapels eine quaderförmige Form mit einer größten Seitenfläche und vier kleineren Umfangsflächen auf, wobei die Formabweichung an zumindest einer der Umfangsflächen ausgebildet ist. Das Formnegativ ist also insbesondere für eine quaderförmige Geometrie eines Stapels - insbesondere ohne Berücksichtigung der Ableiter - vorgesehen, der also zwei größte Seitenflächen und vier kleinere Umfangsflächen aufweist. Das dieser Geometrie entsprechende wannenartige Formnegativ weist entsprechend nur die eine größte Seitenfläche und die Umfangsflächen bzw. Teilbereiche der Umfangsflächen der Geometrie des Stapels, auf.

Insbesondere ist die Formabweichung zumindest an mindestens zwei einander gegenüberliegenden Umfangsflächen ausgebildet. Insbesondere ist die Formabweichung zumindest an jeder der Umfangsflächen ausgebildet. Insbesondere ist die Formabweichung an zwei einander gegenüberliegenden Umfangsflächen jeweils gleich ausgebildet. Insbesondere ist die Formabweichung an den anderen zwei Umfangsflächen anders ausgeführt.

Insbesondere umfasst die Formabweichung am Formnegativ eine vom Stapel aus gesehen konvexe Bombierung der mindestens einen Umfangsfläche. Eine Bombierung umfasst insbesondere eine Wölbung der ansonsten eben ausgeführten Umfangsfläche. Die Wölbung ist insbesondere hin zum Stapel, also vom Stapel aus gesehen konvex ausgeführt. Die Bombierung bildet insbesondere die räumliche Überschneidung zwischen der Geometrie des Stapels und dem in dem Gehäuseteil eingeprägten Formnegativ aus. Die Bombierung wird durch die Anordnung des Stapels in dem Gehäuseteils zumindest teilweise aufgelöst. Dabei wird das Folienmaterial durch den Stapel nach außen, also weg vom Stapel verdrängt, so dass das Folienmaterial nach der Anordnung des Folienmaterials im Wesentlichen die Geometrie des Stapels, also eine ebene Umfangsfläche aufweist.

Insbesondere wird in Schritt d) der Gehäuseteil durch die Anordnung des Stapels hin zur quaderförmigen Geometrie des Stapels umgeformt und dadurch das Folienmaterial im Bereich der größten Seitenfläche durch die Zugspannung gespannt.

Es wird weiter ein Tiefziehwerkzeug zum Umformen eines Folienmaterials in ein Gehäuseteil für eine Batteriezelle vorgeschlagen. Das Tiefziehwerkzeug ist insbesondere zur Verwendung bei bzw. Durchführung des beschriebenen Verfahrens geeignet ausgeführt. Die Batteriezelle umfasst zumindest ein Gehäuse und darin angeordnet mindestens einen Stapel aufeinander angeordneter Elektrodenfolien. Zumindest ein Gehäuseteil des Gehäuses ist aus dem elastisch verformbaren Folienmaterial hergestellt ist. Der Stapel weist eine vorbestimmte dreidimensionale Geometrie auf und ist zur Anordnung in dem Gehäuseteil vorgesehen. Das Tiefziehwerkzeug weist eine vorbestimmte Formabweichung gegenüber der Geometrie des Stapels auf, so dass bei einem Tiefziehen des Gehäuseteils mit dem Tiefziehwerkzeug ein Formnegativ des Stapels in dem Folienmaterial herstellbar ist, das die Formabweichung umfasst. Durch ein Anordnen des Stapels in dem Gehäuseteil ist die Formabweichung im Gehäuseteil durch den Stapel verdrängbar bzw. wird durch den Stapel verdrängt. Durch das Verdrängen ist eine Zugspannung auf einen von der Formabweichung beabstandet angeordneten Bereich des Gehäuseteils ausübbar bzw. wird auf den Bereich ausgeübt.

Es wird weiter ein Gehäuseteil eines Gehäuses einer Batteriezelle vorgeschlagen. Das Gehäuseteil ist insbesondere durch das beschriebene Verfahren und/oder unter Einsatz des beschriebenen Tiefziehwerkzeugs hergestellt. Die Batteriezelle umfasst zumindest ein Gehäuse und darin angeordnet mindestens einen Stapel aufeinander angeordneter Elektrodenfolien. Zumindest ein Gehäuseteil des Gehäuses ist aus einem elastisch verformbaren Folienmaterial hergestellt. Der Stapel weist eine vorbestimmte dreidimensionale Geometrie auf und ist zur Anordnung in dem Gehäuseteil vorgesehen Das Gehäuseteil weist eine vorbestimmte Formabweichung gegenüber der Geometrie des Stapels auf, so dass durch ein Anordnen des Stapels in dem Gehäuseteil die Formabweichung durch den Stapel verdrängbar ist bzw. verdrängt wird. Durch das Verdrängen ist eine Zugspannung auf einen von der Formabweichung beabstandet angeordneten Bereich des Gehäuseteils ausübbar bzw. wird auf den Bereich ausgeübt.

Es wird weiter eine Batteriezelle vorgeschlagen. Die Batteriezelle ist insbesondere durch das beschriebene Verfahren und/oder unter Einsatz des beschriebenen Tiefziehwerkzeugs hergestellt und/oder weist das beschriebene Gehäuseteil auf. Die Batteriezelle umfasst zumindest ein Gehäuse und darin angeordnet mindestens einen Stapel aufeinander angeordneter Elektrodenfolien. Zumindest ein Gehäuseteil des Gehäuses ist aus einem elastisch verformbaren Folienmaterial hergestellt. Der Stapel weist eine vorbestimmte dreidimensionale Geometrie auf. Das Gehäuseteil weist vor der Anordnung des Stapels in dem Gehäuseteil eine vorbestimmte Formabweichung gegenüber der Geometrie des Stapels auf, so dass durch ein Anordnen des Stapels in dem Gehäuseteil die Formabweichung durch den Stapel zumindest teilweise verdrängt ist und durch das Verdrängen ein von der Formabweichung beabstandet angeordneter Bereich des Gehäuseteils einer Zugspannung ausgesetzt ist.

Insbesondere wird die Batteriezelle in einem Kraftfahrzeug eingesetzt bzw. verwendet, insbesondere zur Bereitstellung elektrischer Energie für einen Traktionsantrieb.

Die Ausführungen zu dem Verfahren sind insbesondere auf das Tiefziehwerkzeug, das Gehäuseteil, die Batteriezelle und das Kraftfahrzeug übertragbar und umgekehrt.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: ein bekanntes vorbestimmtes Formnegativ für einen Stapel in einem Gehäuseteil für eine Batteriezelle, in einer perspektivischen Ansicht;
- Fig. 2:: ein durch ein bekanntes Tiefziehwerkzeug hergestelltes Gehäuseteil, in einer perspektivischen Ansicht;
- Fig. 3:: einen Stapel von Elektrodenfolien mit einer vorbestimmten Geometrie, in einer perspektivischen Ansicht;
- Fig. 4:: ein Formnegativ des Gehäuseteils für den Stapel nach Fig. 3, in einer perspektivischen Ansicht; und
- Fig. 5:: das Gehäuseteil nach Anordnung des Stapels, in perspektivischer Ansicht.

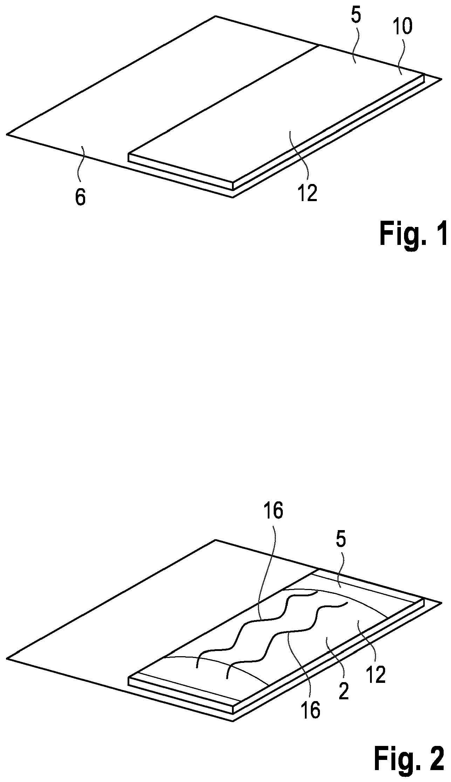

Die Fig. 1 zeigt ein bekanntes vorbestimmtes Formnegativ 10 für einen Stapel 3 in einem Gehäuseteil 5 für eine Batteriezelle 1, in einer perspektivischen Ansicht. Fig. 2 zeigt ein durch ein bekanntes Tiefziehwerkzeug 8 hergestelltes Gehäuseteil 5, in einer perspektivischen Ansicht. Die Fig. 1 und 2 werden im Folgenden gemeinsam beschrieben.

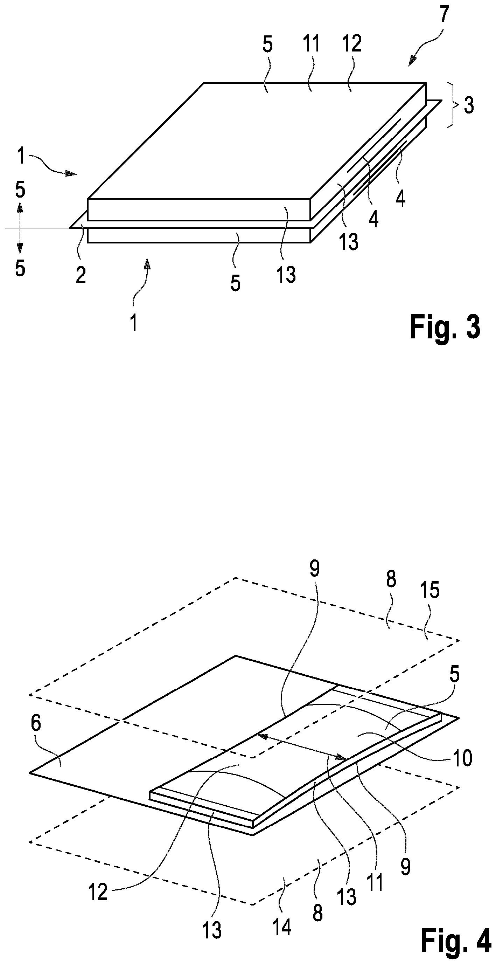

Das Gehäuseteil 5 wird durch Tiefziehen eines Folienmaterials 6 hergestellt. Das Folienmaterial 6 wird dabei durch ein Tiefziehwerkzeug 8 verformt, so dass ein Formnegativ 10 zumindest eines Teils eines Stapels 3 von Elektrodenfolien 4 (siehe z. B. Fig. 3) in dem Folienmaterial 6 erzeugt wird. Der Stapel 3 wird in dem umgeformten Folienmaterial 6 angeordnet und das Gehäuse 2 verschlossen.

Beim Tiefziehen des als Pouchfolie ausgeführten Folienmaterials 6 entsteht durch Federwirkung des Folienmaterials 6 in der größten Seitenfläche 12 eine Wölbung nach außen (siehe Fig. 2). Diese Wölbung entsteht aufgrund der verschiedene E-Module der verschiedenen Schichten der Pouchfolie. Bei der weiteren Verarbeitung der Pouchfolie in der Zellfertigung entstehen in der fertigen Batteriezelle 1 Falten 16 am Gehäuse 2, da die Wölbung in der Pouchfolie einen Materialüberfluss darstellt. Dadurch werden die geforderten Geometrien und Toleranzen der Batteriezelle 1 bzw. des Gehäuses 2 nicht eingehalten.

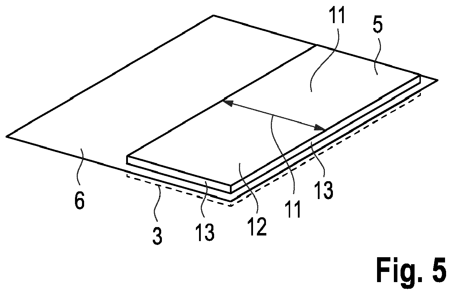

Fig. 3 zeigt einen Stapel 3 von Elektrodenfolien 4 mit einer vorbestimmten Geometrie 7, in einer perspektivischen Ansicht. Fig. 4 zeigt ein Formnegativ 10 des Gehäuseteils 5 für den Stapel 3 nach Fig 3, in einer perspektivischen Ansicht. Fig. 5 zeigt das Gehäuseteil 5 nach Anordnung des Stapels 3, in perspektivischer Ansicht. Die Fig. 3 bis 5 werden im Folgenden gemeinsam beschrieben. Auf die Ausführungen zu den Fig. 1 und 2 wird verwiesen.

Das Gehäuseteil 5 ist durch das beschriebene Verfahren und/ oder unter Verwendung des beschriebenen Tiefziehwerkzeugs 8 hergestellt. Die Batteriezelle 1, für die das Gehäuseteil 5 vorgesehen ist, umfasst ein Gehäuse 2 und darin angeordnet den Stapel 3 aufeinander angeordneter Elektrodenfolien 4 gemäß Fig. 3. Zumindest ein Gehäuseteil 5 des Gehäuses 2 ist aus einem elastisch verformbaren Folienmaterial 6 hergestellt. Der Stapel 3 weist eine vorbestimmte dreidimensionale Geometrie 7 auf und ist zur Anordnung in dem Gehäuseteil 5 vorgesehen ist Das Gehäuseteil 5 weist eine vorbestimmte Formabweichung 9 gegenüber der Geometrie 7 des Stapels 3 auf (siehe Fig. 4), so dass durch ein Anordnen des Stapels 3 in dem Gehäuseteil 5 die Formabweichung 9 durch den Stapel 3 verdrängbar ist bzw. verdrängt wird. Durch das Verdrängen ist eine Zugspannung auf einen von der Formabweichung 9 beabstandet angeordneten Bereich 11 des Gehäuseteils 5 bzw. wird auf den Bereich 11 ausgeübt.

Gemäß Schritt a) des Verfahrens erfolgt insbesondere ein Bereitstellen des Folienmaterials 6. Das Folienmaterial 6 ist eben ausgeführt und weist gegenüber der ebenen Erstreckung keine Verformungen auf.

Gemäß Schritt b) erfolgt ein Bereitstellen eines Tiefziehwerkzeugs 8 zum Umformen des Folienmaterials 6 zur Bildung des Gehäuseteils 5 (siehe in Fig. 4 angedeutet). Das Tiefziehwerkzeug 8 umfasst einen Stempel 14, der mit einer Matrize 15 zur Ausbildung des Gehäuseteils 5, durch eine zumindest teilweise plastische Verformung des Folienmaterials 6, zusammenwirkt.

Der Stapel 3 ist zur Anordnung in dem durch das umgeformte Folienmaterial 6 gebildeten Gehäuseteil 5 vorgesehen. Der Stapel 3 weist damit eine bekannte Geometrie 7 auf, erkennbar - ohne Betrachtung der Ableiter - eine quaderförmige Geometrie 7 (siehe Fig. 3). Damit ist die Form des Tiefziehwerkzeugs 8 vorgegeben. Das Tiefziehwerkzeug 8 weist eine vorbestimmte Formabweichung 9 gegenüber dieser Geometrie 7 des Stapels 3 auf. Das Tiefziehwerkzeug 8 weist also gerade nicht die der Form des Stapels 3 entsprechende und zur Aufnahme des Stapels 3 geeignete Gestalt, also ein Formnegativ 10 des Stapels 3 bzw. eines Teils des Stapels 3 auf, sondern weist eine davon abweichende Formabweichung 9 auf.

Gemäß Schritt c) erfolgt ein Tiefziehen des Gehäuseteils 5 und ein Ausbilden eines Formnegativs 10 des Stapels 3 bzw. eines Teils des Stapels 3 in dem Folienmaterial 6 durch das Tiefziehwerkzeug 8, wobei das Formnegativ 10 die Formabweichung 9 umfasst (siehe Fig. 4). Bereits an dem umgeformten Folienmaterial 6 ist nun erkennbar, dass das durch das Tiefziehen erzeugte Formnegativ 10 von der Geometrie 7 des zur Anordnung in diesem Gehäuseteil 5 vorgesehenen Stapels 3 abweicht.

Gemäß Schritt d) erfolgt ein Anordnen des Stapels 3 in dem durch das Tiefziehen des Folienmaterials 6 erzeugten Gehäuseteil 5 und ein Verformen der Formabweichung 9 des Gehäuseteils 5 durch den Stapel 3 durch Verdrängen (siehe Fig. 5). Durch das Verdrängen der Formabweichung 9 wird eine Zugspannung auf einen von der Formabweichung 9 beabstandet angeordneten Bereich 11 des Gehäuseteils 5 ausgeübt bzw. induziert.

Es liegt also eine räumliche Überschneidung zwischen der Geometrie 7 des Stapels 3 und dem in dem Gehäuseteil 5 eingeprägten Formnegativ 10 vor. Diese Überschneidung wird durch die Anordnung des Stapels 3 in dem Gehäuseteil 5 aufgelöst. Dabei wird das Folienmaterial 6 durch den Stapel 3 verdrängt, so dass das Folienmaterial 6 nach der Anordnung des Stapels 3 im Wesentlichen die Geometrie des Stapels 3 aufweist.

Gemäß Schritt e) erfolgt ein Schließen des Gehäuses 2 und ein Ausbilden der Batteriezelle 1 (siehe Fig. 3 angedeutet).

Infolge der in einem Bereich 11 des Gehäuseteils 5 induzierten Zugspannung kann die Ausbildung einer Wölbung des Folienmaterials 6 verhindert werden. Es wird so sichergestellt, dass das Folienmaterial 6 möglichst eng an der Geometrie 7 des Stapels 3 anliegt. Eine Faltenbildung im Gehäuseteil 5 beim Schließen des Gehäuses 2 und beim Ausbilden der Batteriezelle 1 kann so wirksam verhindert werden.

Der durch das Formnegativ 10 abgebildete Teil des Stapels 3 weist eine quaderförmige Form auf mit einer größten Seitenfläche 12 und vier kleineren Umfangsflächen 13, wobei die Formabweichung 9 an zwei einander gegenüberliegenden Umfangsflächen 13 ausgebildet ist.

Das Formnegativ 10 ist also für eine quaderförmige Geometrie 7 eines Stapels 3 -ohne Berücksichtigung der Ableiter - vorgesehen, der also zwei größte Seitenflächen 12 und vier kleinere Umfangsflächen 13 (siehe Fig. 3) aufweist. Das dieser Geometrie 7 entsprechende wannenartige Formnegativ 10 (siehe Fig. 4) weist entsprechend nur die eine größte Seitenfläche 12 und Teilbereiche der Umfangsflächen 13 der Geometrie 7 des Stapels 3 auf.

Die Formabweichung 9 umfasst am Formnegativ 10 eine vom Stapel 3 aus gesehen konvexe Bombierung der zwei Umfangsflächen 13 (siehe Fig. 4). Eine Bombierung umfasst eine Wölbung der ansonsten eben ausgeführten Umfangsfläche 13. Die Wölbung ist hin zum Stapel 3, also vom Stapel 3 aus gesehen konvex ausgeführt. Die Bombierung bildet die räumliche Überschneidung zwischen der Geometrie 7 des Stapels 3 und dem in dem Gehäuseteil 5 eingeprägten Formnegativ 10 aus. Die Bombierung wird durch die Anordnung des Stapels 3 in dem Gehäuseteils 5 zumindest teilweise aufgelöst. Dabei wird das Folienmaterial 6 durch den Stapel 3 nach außen, also weg vom Stapel 3 verdrängt, so dass das Folienmaterial 6 nach der Anordnung des Folienmaterials 6 im Wesentlichen die Geometrie 7 des Stapels 3, also ebene Umfangsflächen 13 aufweist (siehe Fig. 5).

In Schritt d) wird der Gehäuseteil 5 durch die Anordnung des Stapels 3 hin zur quaderförmigen Geometrie 7 des Stapels 3 umgeformt und dadurch das Folienmaterial 6 im Bereich der größten Seitenfläche 12 durch die Zugspannung gespannt.

### Bezugszeichenliste

- 1: Batteriezelle
- 2: Gehäuse
- 3: Stapel
- 4: Elektrodenfolie
- 5: Gehäuseteil
- 6: Folienmaterial
- 7: Geometrie
- 8: Tiefziehwerkzeug
- 9: Formabweichung
- 10: Formnegativ
- 11: Bereich
- 12: Seitenfläche
- 13: Umfangsfläche
- 14: Stempel
- 15: Matrize
- 16: Falten

## Patentansprüche

1. Verfahren zur Herstellung einer Batteriezelle (1), zumindest umfassend ein Gehäuse (2) und darin angeordnet mindestens einen Stapel (3) aufeinander angeordneter Elektrodenfolien (4), wobei zumindest ein Gehäuseteil (5) des Gehäuses (2) aus einem elastisch verformbaren Folienmaterial (6) hergestellt ist und wobei der Stapel (3) eine vorbestimmte dreidimensionale Geometrie (7) aufweist; wobei das Verfahren zumindest die folgenden Schritte umfasst:
a) Bereitstellen des Folienmaterials (6);
b) Bereitstellen eines Tiefziehwerkzeugs (8) zum Umformen des Folienmaterials (6) zur Bildung zumindest des Gehäuseteils (5), wobei der Stapel (3) zur Anordnung in dem Gehäuseteil (5) vorgesehen ist und wobei das Tiefziehwerkzeug (8) eine vorbestimmte Formabweichung (9) gegenüber der Geometrie (7) des Stapels (3) aufweist;
c) Tiefziehen des Gehäuseteils (5) und Ausbilden eines Formnegativs (10) des Stapels (3) in dem Folienmaterial (6), wobei das Formnegativ (10) die Formabweichung (9) umfasst;
d) Anordnen des Stapels (3) in dem Gehäuseteil (5) und Verformen der Formabweichung (9) des Gehäuseteils (5) durch den Stapel (3) durch Verdrängen, wobei durch das Verdrängen der Formabweichung (9) eine Zugspannung auf einen von der Formabweichung (9) beabstandet angeordneten Bereich (11) des Gehäuseteils (5) ausgeübt wird;
e) Schließen des Gehäuses (2) und Ausbilden der Batteriezelle (1).

2. Verfahren nach Patentanspruch 1, wobei der durch das Formnegativ (10) abgebildete Teil des Stapels (3) eine quaderförmige Form mit einer größten Seitenfläche (12) und vier kleineren Umfangsflächen (13) aufweist, wobei die Formabweichung (9) an zumindest einer der Umfangsflächen (9) ausgebildet ist.

3. Verfahren nach einem der vorhergehenden Patentansprüche, wobei die Formabweichung (9) an zwei einander gegenüberliegenden Umfangsflächen (13) ausgebildet ist.

4. Verfahren nach einem der vorhergehenden Patentansprüche, wobei die Formabweichung (9) an jeder der Umfangsflächen (13) ausgebildet ist.

5. Verfahren nach einem der vorhergehenden Patentansprüche 2 bis 4, wobei die Formabweichung (9) am Formnegativ (10) eine vom Stapel (3) aus gesehen konvexe Bombierung der mindestens einen Umfangsfläche (13) umfasst.

6. Verfahren nach einem der vorhergehenden Patentansprüche 2 bis 5, wobei in Schritt d) der Gehäuseteil (5) durch die Anordnung des Stapels (3) hin zur quaderförmigen Geometrie (7) des Stapels (3) umgeformt und dadurch das Folienmaterial (6) im Bereich (11) der größten Seitenfläche (12) durch die Zugspannung gespannt wird.

7. Tiefziehwerkzeug (8) zum Umformen eines Folienmaterials (6) in ein Gehäuseteil (5) für eine Batteriezelle (1), wobei die Batteriezelle zumindest ein Gehäuse (2) und darin angeordnet mindestens einen Stapel (3) aufeinander angeordneter Elektrodenfolien (4) umfasst, wobei zumindest das Gehäuseteil (5) des Gehäuses (2) aus dem elastisch verformbaren Folienmaterial (6) hergestellt ist und wobei der Stapel (3) eine vorbestimmte dreidimensionale Geometrie (7) aufweist und zur Anordnung in dem Gehäuseteil (5) vorgesehen ist; wobei das Tiefziehwerkzeug (8) eine vorbestimmte Formabweichung (9) gegenüber der Geometrie (7) des Stapels (3) aufweist, so dass bei einem Tiefziehen des Gehäuseteils (5) mit dem Tiefziehwerkzeug (8) ein Formnegativ (10) des Stapels (3) in dem Folienmaterial (6) herstellbar ist, das die Formabweichung (9) umfasst; wobei durch ein Anordnen des Stapels (3) in dem Gehäuseteil (5) die Formabweichung (9) durch den Stapel (3) verdrängbar ist, so dass durch das Verdrängen eine Zugspannung auf einen von der Formabweichung (9) beabstandet angeordneten Bereich (11) des Gehäuseteils (5) ausübbar ist.

8. Gehäuseteil (5) eines Gehäuses (2) einer Batteriezelle (1), wobei die Batteriezelle (1) zumindest ein Gehäuse (2) und darin angeordnet mindestens einen Stapel (3) aufeinander angeordneter Elektrodenfolien (4) umfasst, wobei zumindest das Gehäuseteil (5) des Gehäuses (2) aus einem elastisch verformbaren Folienmaterial (6) hergestellt ist und wobei der Stapel (3) eine vorbestimmte dreidimensionale Geometrie (7) aufweist und zur Anordnung in dem Gehäuseteil (5) vorgesehen ist; wobei das Gehäuseteil (5) eine vorbestimmte Formabweichung (9) gegenüber der Geometrie (7) des Stapels (3) aufweist, so dass durch ein Anordnen des Stapels (3) in dem Gehäuseteil (5) die Formabweichung (9) durch den Stapel (3) verdrängbar ist, so dass durch das Verdrängen eine Zugspannung auf einen von der Formabweichung (9) beabstandet angeordneten Bereich (11) des Gehäuseteils (5) ausübbar ist.

9. Batteriezelle (1), zumindest umfassend ein Gehäuse (2) und darin angeordnet mindestens einen Stapel (3) aufeinander angeordneter Elektrodenfolien (4), wobei zumindest ein Gehäuseteil (5) des Gehäuses (2) aus einem elastisch verformbaren Folienmaterial (6) hergestellt ist und wobei der Stapel (3) eine vorbestimmte dreidimensionale Geometrie (7) aufweist; wobei das Gehäuseteil (5) vor der Anordnung des Stapels (3) in dem Gehäuseteil (5) eine vorbestimmte Formabweichung (9) gegenüber der Geometrie (7) des Stapels (3) aufweist, so dass durch ein Anordnen des Stapels (3) in dem Gehäuseteil (5) die Formabweichung (9) durch den Stapel (3) zumindest teilweise verdrängt ist und durch das Verdrängen ein von der Formabweichung (9) beabstandet angeordneter Bereich (11) des Gehäuseteils (5) einer Zugspannung ausgesetzt ist.
